# EUROPÄISCHE PATENTANMELDUNG

(11) **EP 3 081 892 A1**
(43) Veröffentlichungstag der Anmeldung: **19.10.2016**
(21) Anmeldenummer: 16000797.7
(22) Anmeldetag: 07.04.2016
(51) Int. Cl.: F41G 7/22, G06K 9/46, G06T 7/00, G01S 3/786

(54) **VERFAHREN ZUM LENKEN EINES FLUGKÖRPERS**

(30) Priorität: 17.04.2015 DE 102015004939
(71) Anmelder: Diehl BGT Defence GmbH & Co. KG, 88662 Überlingen (DE)
(72) Erfinder: Gagel, Florian, DE - 88690 Uhldingen-Mühlhofen (DE); Kushauer, Jörg, DE - 88693 Deggenhausertal (DE); Frieauff, Dieter, DE - 88630 Pfullendorf (DE)
(74) Vertreter: Diehl Patentabteilung

(57) **Zusammenfassung**

Die Erfindung geht aus von einem Verfahren zum Lenken eines Flugkörpers (4) auf ein Zielobjekt (6), bei dem eine bildgebende Plattform (18) ein Referenzbild (42) des Zielobjekts (6) erstellt, charakteristische Bildmerkmale aus dem Referenzbild (42) ermittelt werden, diese dem Flugkörper (4) übergeben werden, der Flugkörper (4) ein Zielbild (44) des Zielobjekts (6) erstellt und unter Verwendung der charakteristischen Bildmerkmale das Zielobjekt (6) ansteuert.

Um den Flugkörpers (4) auch auf ein weit entferntes Zielobjekt (6) lenken zu können, wird vorgeschlagen, dass als charakteristische Bildmerkmale Schlüsselpunkte im Referenzbild (42) ermittelt werden und zu jedem Schlüsselpunkt zumindest ein mehrdimensionaler Referenzdeskriptor (Dii), und der Flugkörper (4) aus dem Zielbild (44) Schlüsselpunkte und zu diesen jeweils zumindest einen Zieldeskriptor ermittelt, Zieldeskriptoren mit Referenzdeskriptoren (Dii) vergleicht und das Zielobjekt (6) bei einem Vergleichsergebnis oberhalb eines Grenzwert als erkannt klassifiziert und ansteuert.

## Beschreibung

Die Erfindung betrifft ein Verfahren zum Lenken eines Flugkörpers auf ein Zielobjekt, bei dem eine bildgebende Plattform ein Referenzbild des Zielobjekts erstellt, charakteristische Bildmerkmale aus dem Referenzbild ermittelt werden, diese dem Flugkörper übergeben werden, der Flugkörper ein Zielbild des Zielobjekts erstellt und unter Verwendung der charakteristischen Bildmerkmale das Zielobjekt ansteuert.

Zum Ansteuern eines Flugkörpers auf ein Zielobjekt ist es bekannt, dass eine bildgebende Plattform, beispielsweise ein Flugzeug oder ein Hubschrauber, ein Bild des Zielobjekts erstellt, der Pilot oder ein Bediener der Plattform das Zielobjekt auf dem Bild markiert und diese Markierung an den Flugkörper überträgt. Dieser nimmt seinerseits ein Bild des Zielobjekts auf, übernimmt die Markierung, die das Zielobjekt festlegt und fliegt auf das so festgelegte Zielobjekt zu. Mithilfe eines Suchkopfs mit einer Erfassungsoptik wird das markierte Zielobjekt während des Anflugs beobachtet und kann - auch wenn es sich selbst in der Landschaft bewegt - nachverfolgt werden.

Bei der Erfassung sehr weit entfernter Zielobjekte kann es vorkommen, dass der Flugkörper das Zielobjekt in seinem eigenen Bild nicht erkennt. Er erhält zwar die Markierung in seinem Sichtfeld, kann das Zielobjekt jedoch nicht verfolgen, weil der Suchkopf des Flugkörpers keine oder nicht genügend charakteristische Bildmerkmale des Zielobjekts erfassen kann.

Es ist eine Aufgabe der vorliegenden Erfindung, ein Verfahren zum Lenken eines Flugkörpers auf ein Zielobjekt anzugeben, mit dem auch weit entfernte Ziele angeflogen werden können.

Diese Aufgabe wird durch ein Verfahren der eingangs genannten Art gelöst, bei dem erfindungsgemäß als charakteristische Bildmerkmale Schlüsselpunkte im Referenzbild ermittelt werden und insbesondere zu jedem Schlüsselpunkt zumindest ein mehrdimensionaler Referenzdeskriptor. Die Schlüsselpunkte und/oder die Referenzdeskriptoren werden als charakteristische Bildmerkmale dem Flugkörper übergeben und dieser kann, auch wenn er das Zielobjekt noch nicht als solches erfassen kann, in eine Richtung, vorzugsweise grob in Richtung des Zielobjekts, losfliegen. Während der Annäherung des Flugkörpers auf das Zielobjekt tritt dieses immer deutlicher in Erscheinung und kann schließlich als solches erfasst werden. Anhand der Schlüsselpunkte und/oder Referenzdeskriptoren kann der Flugkörper das Zielobjekt als solches erfassen und ansteuern.

Zweckmäßigerweise ermittelt der Flugkörper aus dem Zielbild Schlüsselpunkte und insbesondere zu diesen jeweils zumindest einen mehrdimensionalen Zieldeskriptor. Die Zieldeskriptoren können mit übergebenen Referenzdeskriptoren verglichen werden und bei einem erfolgreichen Vergleich, z.B. bei einem Vergleichsergebnis oberhalb eines Grenzwerts, kann das Zielobjekt als solches erkannt werden. Der Flugkörper kann nun unter Verwendung der Richtung des erkannten Zielobjekts das Zielobjekt ansteuern.

Die Schlüsselpunkte können mit einem Merkmalsdetektor aus dem Referenzbild ermittelt werden. Ein Merkmalsdetektor ist in der Lage, Punkte in einem Bild zu finden, die das Bild charakterisieren. Ein guter Merkmalsdetektor ist auch bei einer Skalierung, Rotation, bei einer geometrischen Transformation und Beleuchtungsveränderungen des aufgenommenen Zielobjekts in der Lage, die gleichen Schlüsselpunkte in dem erneut aufgenommenen Bild des Zielobjekts zu finden.

Es sind eine Reihe von geeigneten Merkmalsdetektoren bekannt, wie beispielsweise der SIFT-Merkmalsdetektor (Scale-Invariant Feature Transform), der SURF-Merkmalsdetektor (Speeded Up Robust Features), der ORB-Merkmalsdetektor (Oriented Fast and Rotated Brief), sowie weitere Verfahren. Das SIFT-Verfahren und der SIFT-Merkmalsdetektor sind beispielsweise beschrieben in Lowe, David G.: Object recognition from local scale-invariant features; Computer vision, 1999; The proceedings of the seventh IEEE international conference on Bd. 2 Ieee, 1999, S. 1150-1157, und in Lowe, David G.: Distinctive image features from scale-invariant keypoints; International journal of Computer vision 60 (2004), Nr. 2, S. 91-110. Das SURF-Verfahren mit dem SURF-Merkmalsdetektor ist beispielsweise beschrieben in Bay, Herbert; Tuytelaars, Tinne; Van Gool, Luc: Surf: Speeded up robust features; Computer Vision-ECCV 2006. Springer, 2006, S. 404-417. Und das ORB-Verfahren mit dem ORB-Merkmalsdetektor ist beispielsweise beschrieben in Rublee, Ethan; Rabaud, Vincent; Konolige, Kurt; Bradski, Gary: ORB: an efficient alternative to SIFT or SURF. In: Computer Vision (ICCV), 2011 IEEE International Conference on IEEE, 2011, S. 2564-2571. Andere bekannte Verfahren für eine Merkmalsfindung und einen automatischen Merkmalsvergleich sind beispielsweise Laplacian of Gaussian (LoG), sowie Normalized Cross-Correlation Function (NCCF). Es können aber auch andere Verfahren verwendet werden, die für einen automatischen Vergleich von Schlüsselpunkten bzw. Deskriptoren geeignet erscheinen.

Vor der Ermittlung der Schlüsselpunkte kann das Referenzbild, aus dem die Schlüsselpunkte gewonnen werden sollen, mit einem Gauß-Filter geglättet werden, um es von Bildrauschen zu bereinigen. Nach dem Ermitteln der Schlüsselpunkte können diese in einem weiteren Verfahrensschritt auf ihre Robustheit untersucht werden, wobei letztendlich zweckmäßigerweise nur solche Schlüsselpunkte ausgewählt werden, die vorgegebenen Stabilitätsansprüchen genügen. Robust sind beispielsweise solche Schlüsselpunkte, die unempfindlich gegen perspektivische Verzerrung und/oder Rotation sind. Dafür geeignet sind beispielsweise Schlüsselpunkte, deren Bildeigenschaften von ihrem Hintergrund abweichen. Eine Rotationsstabilität kann erreicht werden, wenn einem Schlüsselpunkt eine oder mehrere Orientierung/en zugewiesen wird, basierend auf den Orientierungen der umliegenden Bildgradienten. Zukünftige Berechnungen beziehungsweise Vergleiche können nun auf der Grundlage von Bilddaten durchgeführt werden, die relativ zu den zugewiesenen Orientierungen, und insbesondere auch Skalierungen und Positionierungen, transformiert wurden, um Invarianz für eben diese Transformationen zu gewährleisten.

Aus den so gefundenen Schlüsselpunkten können nun die Referenzdeskriptoren ermittelt werden. Hierzu werden die den Schlüsselpunkt umgebenden Bildgradienten ermittelt, die in einem mehrdimensionalen Merkmalsvektor zusammengefasst werden können. Auch dieser Merkmalsvektor ist zweckmäßigerweise robust gegen Änderungen in der Beleuchtung, der Verzerrung, der Rotation und dergleichen. Ein Deskriptor enthält neben seinen Bildmerkmalen am Schlüsselpunkt zweckmäßigerweise auch die Koordinaten seines Schlüsselpunkts, so dass der Schlüsselpunkt im Deskriptor enthalten ist.

Ein nachfolgender Vergleich der Zieldeskriptoren, also der vom Flugkörper ermittelten Deskriptoren aus dem Zielbild, mit den Referenzdeskriptoren, erfolgt mit einem geeigneten Algorithmus, beispielsweise dem Random Sample Consensus-Algorithmus (RANSAC) oder dem FLANN-Matcher. Allgemein gesprochen kann zum Vergleich von Deskriptoren die Distanzfunktion verwendet werden, die die Vektordistanz, also den Richtungsunterschied zweier Vektoren, bestimmt. Dies kann jedoch bei Bildern, in denen sich gewisse Objekte wiederholen, zu mehrdeutigen Ergebnissen führen. In der Praxis kann deshalb ein Distanzquotient verwendet werden, wobei der beste Match, also der kleinste Abstand, durch den zweitbesten Match geteilt wird. Sehr ähnlichen Ergebnissen kann nun eine kleinere Wahrscheinlichkeit zugeordnet werden, dass der gefundene Match korrekt ist. Beim SIFT-Verfahren können k-d Trees oder andere Suchbäume verwendet werden. Für den Brief-Merkmalsdetektor aus dem ORB-Verfahren kann die Hamming-Distanz der Bit Strings der Deskriptoren verwendet werden. Um die Suche der nächsten Nachbarn zu optimieren, kann auch Locality Sensitive Haching verwendet werden, sodass ähnliche Bit Strings so gehacht werden, dass sie mit großer Wahrscheinlichkeit in denselben Baskets landen.

Beispielhaft wird im Folgenden der SIFT-Merkmalsdetektor ausführlicher beschrieben. Von dem der Analyse zu unterziehenden Bild werden unterschiedlich stark verschwommene Kopien des Bilds erstellt, indem ein Gauß-Filter mehrfach mit zunehmender Stärke auf das Bild angewendet wird oder der gleichbleibende Gauß-Filter immer wieder auf das letzte gefilterte Bild angewendet wird. In der Verschwimmungsskala nebeneinander liegende Bilder werden nun voneinander subtrahiert, was als Difference of Gaussian (DoG) bezeichnet wird. Die unterschiedlich stark verschwommenen Kopien des Bilds und die DoG-Bilder bilden zusammen eine Oktave. Da der Gauß-Filter kontrastreiche Regionen im Bild stark verändert, führt eine Subtraktion der Bilder dazu, dass solche Stellen, an denen sich die Bilder stark verändert haben, also kontrastreiche Regionen, wie Kanten und Ecken, gefunden werden. Die Schlüsselpunkte können nun, wie in der oben angegebenen Veröffentlichung von Lowe aus dem Jahr 2004 vorgeschlagen, gefunden werden. Hierbei werden Schlüsselpunkte, die in einer Fläche liegen und deren Gradienten insofern klein sind, ausgeschieden. Liegt der Schlüsselpunkt auf einer Kante, so ist der Gradient senkrecht zur Kante groß und der Gradient parallel zur Kante klein. Auch solche Schlüsselpunkte werden entfernt. Ein auf einer Ecke liegender Schlüsselpunkt beinhaltet zwei orthogonale und große Gradienten. Solche Schlüsselpunkte sind besonders robust und sollten beibehalten werden.

Da hierbei nur scharfe Konturen im Ausgangsbild gefunden werden, nicht jedoch ebenfalls signifikante weichere Konturen, wird nun - oder bereits vor der Berechnung der Schlüsselpunkte - eine nächsthöhere Oktave gebildet, indem beispielsweise von dem verschwommensten Bild nur jeder zweite Pixel verwendet wird oder das Ausgangsbild verpixelt wird. In einer nächsthöheren Oktave bzw. Bildoktave weist das der Erstellung der Deskriptoren zugrunde liegende Bild also eine niedrigere Auflösung auf als das Bild der niedrigeren Oktave. Die niedrigere Auflösung kann geschaffen werden, indem z.B. je eine Gruppe von Pixeln, insbesondere 2 Pixel oder n x n Pixel, beispielsweise 2 x 2 Pixel, zu einem Pixel zusammengefasst werden, z.B. durch Addition, Mittelwertbildung oder Herausnehmen von nur einem Pixel aus der Gruppe. In dieser zweiten Oktave werden nun wiederum die Schlüsselpunkte bestimmt. Die Schlüsselpunkte umfassen neben ihren x- und y-Koordinaten auch einen Skalenfaktor, also die Angabe der Oktave, aus der sie stammen. Auf diese Weise wird dem Bild des Zielobjekts eine Vielzahl von Schlüsselpunkten zugewiesen. Die den Schlüsselpunkten zugeordneten bzw. die Schlüsselpunkte enthaltenden Deskriptoren enthalten also zweckmäßigerweise auch die Angabe der Oktave, also den Skalenfaktor.

Um eine zuverlässige Vergleichbarkeit der Zieldeskriptoren mit den Referenzdeskriptoren zu erreichen, ist es zweckmäßig, wenn die Zieldeskriptoren mit dem gleichen Verfahren gewonnen werden, wie die Referenzdeskriptoren. Beim Vergleich der Deskriptoren gilt eine Korrelation bzw. ein Vergleich von zwei Deskriptoren als erfolgreich, wenn die Ähnlichkeit der Deskriptoren über einem vorbestimmten Vergleichswert liegt. Im Zielbild kann nun ein Korrelationspunkt gesetzt werden, der zu einer erfolgreichen Korrelation mit einem Bildpunkt des Referenzbilds geführt hat. Der Korrelationspunkt ist identisch mit seinem Schlüsselpunkt im Zielbild und ihm ist ein Schlüsselpunkt im Referenzbild zugeordnet, zu dem aus dem dessen Referenzdeskriptor Daten übernommen werden können.

Einzelne Korrelationspunkte im Zielbild können auch dann vorliegen, wenn das Zielobjekt noch gar nicht im Zielbild erkennbar ist, da auch andere Bildstrukturen zufälligerweise zu erfolgreichen Korrelationen einzelner Punkte führen können. Eine Klassifizierung des Zielobjekts als erkannt sollte daher zweckmäßigerweise erst dann erfolgen, wenn eine genügende Anzahl von Korrelationspunkten im Zielbild gefunden wurde. Die Anzahl kann vorher festgelegt sein, beispielsweise in einem vorbestimmten Zusammenhang mit Bildparametern des Zielbilds. Erst bei so erfolgter und erfolgreicher Korrelation des Zielbilds mit dem Referenzbild gilt das Zielobjekt als solches als erkannt.

Die bildgebende Plattform kann ein bemanntes Fahrzeug, insbesondere ein Luftfahrzeug, wie ein Flugzeug oder ein Hubschrauber, oder ein unbemanntes Luftfahrzeug sein. Es kann den Flugkörper mit sich tragen. Die bildgebende Plattform kann auch eine tragbare Plattform sein, z.B. eine Kameraeinrichtung eines Spähers.

Zum Erstellen des Referenzbilds muss die bildgebende Plattform zunächst in Sichtweite zum Zielobjekt sein und ist somit selbst angreifbar. Um die daraus erwachsende Gefahr gering zu halten, ist es vorteilhaft, wenn die bildgebende Plattform aus einer Sichtposition, aus der heraus das Ziel für die Plattform sichtbar ist, das Referenzbild erstellt und sich dann in eine verdeckte Position, aus der heraus das Ziel für die Plattform verdeckt ist, bewegt. Die Sichtbarkeit der Plattform kann so auf einen geringen Zeitraum, der für das Erstellen des Referenzbilds notwendig ist, beschränkt bleiben. Vorteilhafterweise steuert der Flugkörper das Zielobjekt an, während die Plattform in der verdeckten Position verbleibt. Auch ein Start des Flugkörpers von der bildgebenden Plattform kann aus der verdeckten Position heraus erfolgen. Ebenfalls ist es möglich, dass der Start des Flugkörpers von der bildgebenden Plattform aus einer Sichtposition heraus erfolgt, die bildgebende Plattform sich jedoch während des Anflugs des Flugkörpers auf das Zielobjekt in die verdeckte Position bewegt. Die bildgebende Plattform kann nun weitere Missionen durchführen, sich beispielsweise in eine Sichtposition zu einem weiteren Zielobjekt begeben, während der Flugkörper auf das erste Zielobjekt zufliegt. Auch die Übergabe von charakteristischen Bilddaten an einen weiteren Flugkörper, während der erste Flugkörper das Ziel ansteuert, ist möglich.

Um einen Anflug des Flugkörpers in Richtung zum Zielobjekt auch vor Erkennung des Zielobjekts zu ermöglichen, ist es vorteilhaft, wenn dem Flugkörper zusätzlich zu den charakteristischen Bilddaten Einweisungsdaten für einen vorläufigen Anflug übergeben werden, beispielsweise GPS-Koordinaten und/oder charakteristische Bildmerkmale bzw. Bilddaten eines weiteren Bilds. So kann es beispielsweise sein, dass eine Wärmesignatur des Zielobjekts für den Flugkörper bereits sichtbar ist, wohingegen das Zielobjekt als solches noch nicht oder nicht ausreichend erkennbar ist. Eine solche Wärmesignatur kann beispielsweise eine Abgaswolke hinter einem Fahrzeug sein. Die zusätzlich übergebenen Einweisungsdaten können insofern Bilddaten aus dem Referenzbild oder einem anderen Bild sein, das in einem anderen oder dem gleichen Frequenzspektrum wie das Referenzbild aufgenommen wurde. Wird beispielsweise eine Abgaswolke für eine vorläufige Einweisung verwendet, so kann das Referenzbild und/oder das zusätzliche Bild im infraroten Spektralbereich aufgenommen sein, wodurch eine einfache Optik im Flugkörper ermöglicht wird.

In einer vorteilhaften Ausführungsform der Erfindung fliegt der Flugkörper das Zielobjekt unter Verwendung vorläufiger Einweisungsdaten bereits an, bevor die ersten Zieldeskriptoren ermittelt sind. Liegt später eine erfolgreiche Erkennung bzw. Klassifizierung des Zielobjekts als solches vor, kann der Flugkörper seinen Flugkurs anhand der dann ermittelten Schlüsselpunkte verändern. Auf diese Weise kann der Flugkörper beispielsweise von oberhalb einer Wolkendecke gestartet bzw. abgeworfen werden und fliegt bereits ohne Sichtkontakt in Richtung auf das Zielobjekt unter Verwendung der vorläufigen Einweisungsdaten. Die bildgebende Plattform bzw. die Startplattform - Start und Abwurf des Flugkörpers werden im Folgenden als Synonym verwendet - kann während des Starts des Flugkörpers und des Ansteuerns des Flugkörpers auf das Zielobjekt für das Zielobjekt unsichtbar bleiben.

Die bildgebende Plattform kann eine Plattform sein, von der aus der Flugkörper gestartet wird. Ebenfalls ist es möglich, dass der Flugkörper von einer Startplattform aus gestartet wird und die bildgebende Plattform eine von der Startplattform unabhängige Einheit ist. Beispielsweise kann die bildgebende Plattform das Referenzbild lange vor dem Start des Flugkörpers angefertigt haben und das Referenzbild wurde in ein Archiv oder eine Bilddatenbank gegeben. Wenn die Klasse des Zielobjekts bekannt ist, beispielsweise um welches Fahrzeug oder welchen Fahrzeugtyp es sich handelt, so kann auf das Archivbild als Referenzbild zurückgegriffen werden und damit auf die mit dem Referenzbild verknüpften charakteristischen Bilddaten.

In einer weiteren vorteilhaften Ausgestaltung der Erfindung werden die Referenzdeskriptoren aus mehreren Bildoktaven des Referenzbilds ermittelt. Die Bildoktaven sind zweckmäßigerweise verschiedenen Bildauflösungen des Zielobjekts zugeordnet. Wird das Zielbild beispielsweise von einer großen Entfernung zum Zielobjekt aufgenommen, so führt ein Vergleich von Zieldeskriptoren mit solchen Referenzdeskriptoren zu einem ausreichenden Vergleichsergebnis, die von einer höheren Oktave stammen, also beispielsweise weiche Strukturen beschreiben. Die Aufnahme des Zielobjekts aus einer geringeren Entfernung führt jedoch zu Zieldeskriptoren und diese zu einem ausreichenden Vergleichsergebnis mit Referenzdeskriptoren einer tieferen Oktave. Hierbei muss die Oktave des Referenzdeskriptors zunächst keine Rolle spielen, da ein Zieldeskriptor mit Referenzdeskriptoren von beispielsweise allen Oktaven verglichen werden kann. Zum Einsparen von Rechenzeit kann es jedoch sinnvoll sein, den Vergleich der Zieldeskriptoren auf Referenzdeskriptoren einer vorbestimmten Bildoktave oder mehreren vorbestimmten aber nicht allen vorhandenen Bildoktaven zu beschränken. Gleiches gilt zweckmäßigerweise vice versa auch für die Zieldeskriptoren. Auch diesen kann ein Skalenfaktor zugeordnet sein, und es können zu einem Zielbild Zieldeskriptoren mehrerer Oktaven gebildet werden. Bei einem erfolgreichen Deskriptorenvergleich, im Folgenden auch Match genannt, können die Bildoktaven verglichen und daraus auf das Verhältnis der Auflösung des Zielobjekts im Zielbild geschlossen werden. Der Deskriptorenvergleich liefert insofern zweckmäßigerweise zusätzlich zur Klassifizierung eine Oktavenangabe bzw. ein Oktavenverhältnis, mithilfe dessen zum einen auf die Auflösung des Zielobjekts im Zielbild geschlossen werden kann, und mit dem zum anderen bei zukünftigen Vergleichen Rechenzeit gespart werden kann.

Zweckmäßigerweise weist das Referenzbild eine zumindest zweifach, insbesondere eine zumindest zehnfach höhere Auflösung des Zielobjekts auf, als das vom Flugkörper aufgenommene Zielbild. Eine Einweisung des Flugkörpers auf das Zielobjekt kann auch unter Verwendung einer verhältnismäßig einfachen Erfassungsoptik des Flugkörpers erfolgen, da ein höher aufgelöstes Bild des Zielobjekts mit dem Referenzbild für einen erfolgreichen Endanflug bereits vorliegt. Die Auflösung des Zielobjekts muss nicht die Bildauflösung absolut sein, sondern kann auch durch die Optik oder Sichtverhältnisse gegeben sein. Weisen beispielsweise die Detektoren der bildgebenden Plattform und des Flugkörpers die gleiche Pixel-Anzahl, und insofern eine gleiche absolute Bildauflösung auf, die bildgebende Plattform verfügt jedoch über eine hochwertige und stark vergrößernde Optik, so ist im Referenzbild das Zielobjekt durch die hochwertige Vergrößerung höher aufgelöst als das Zielobjekt im nicht vergrößerten Zielbild.

Während des Flugs des Flugkörpers auf das Zielobjekt zu nimmt der Flugkörper zweckmäßigerweise fortwährend neue Zielbilder auf und korreliert diese, bzw. deren charakteristische Bildmerkmale, mit dem Referenzbild bzw. dessen charakteristischen Bildmerkmalen. Die Bildaufnahme erfolgt beispielsweise in einer festgelegten Zeittaktung, wie in regelmäßigen Zeitabständen oder abhängig von Flugparametern. Jedes der aufgenommenen Zielbilder wird mit dem Referenzbild korreliert oder es wird aus der Gesamtheit der aufgenommenen Zielbilder nach einem vorbestimmten Algorithmus die zur Korrelation heranzuziehenden Zielbilder bestimmt, beispielsweise jedes n-te Bild, wobei n eine ganzzahlige Zahl ist. Eine solche fortwährende Korrelation ist mit hohem Rechenaufwand verbunden. Es ist daher vorteilhaft, eine erfolgreiche Korrelation mit so wenig Rechenaufwand wie möglich herzustellen.

Ein Korrelationsrechenaufwand kann niedrig gehalten werden, wenn eine Korrelation von Zieldeskriptoren zunächst mit Referenzdeskriptoren ausschließlich einer ersten Gruppe von Bildoktaven und nachfolgend mit Referenzdeskriptoren ausschließlich einer zweiten, niedrigeren Gruppe von Bildoktaven erfolgt. Hierzu sind die Referenzdeskriptoren zweckmäßigerweise mit der Angabe der Bildoktave bzw. dem Skalenfaktor versehen, sodass die Referenzdeskriptoren einer Bildoktave zugeordnet werden können. In der Regel wird es so sein, dass der Flugkörper das Zielobjekt zunächst niedrig aufgelöst abbildet und somit zunächst die weicheren Konturen des Zielobjekts erkennen kann. Diese werden von Referenzdeskriptoren einer höheren Bildoktave beschrieben. Je näher der Flugkörper an das Zielobjekt kommt, desto schärfere Konturen werden sichtbar, die mit Referenzdeskriptoren einer niedrigeren Bildoktave beschrieben werden. Es ist daher nicht unbedingt notwendig, bereits zu Anfang mit Referenzdeskriptoren einer niedrigeren Bildoktave zu korrelieren. Beispielsweise beginnt die Korrelation mit den obersten beiden vorhandenen Bildoktaven. Nach einer erfolgreichen Korrelation kann mit der zweitobersten und drittobersten Bildoktave korreliert werden. Nach und nach wird mit einer oder mehreren der jeweils niedrigeren Bildoktaven korreliert. Der Flugkörper "durchfliegt" die Bildoktaven mit Annäherung an das Zielobjekt.

Unter "höhere Bildoktaven" und "niedrigere Bildoktaven" kann im Folgenden verstanden werden, dass die höheren Bildoktaven höhere Bildoktaven als die niedrigen Bildoktaven sind und vice versa, die Angabe "höher" bzw. "niedriger" also eine relative Angabe ist. Bei dem obigen Beispiel sind die höheren Bildoktaven die obersten beiden Bildoktaven und die niedrigeren Bildoktaven die zweit- und drittoberste Bildoktave. Unter "Korrelation" kann in diesem speziellen Zusammenhang ein Vergleich der Zieldeskriptoren mit den Referenzdeskriptoren bis zu einem erfolgreichen Vergleich sein, also bis zu einer Klassifizierung des Zielobjekts als solches, oder bis zu einem Abbruch des Vergleichs, sodass keine erfolgreiche Korrelation bzw. kein erfolgreicher Vergleich von Zielbild mit Referenzbild bzw. deren charakteristischer Bildmerkmale möglich ist. Die Korrelation ist insofern eine abschließende Korrelation.

Weiter kann Rechenzeit eingespart werden, wenn nach einer erfolgreichen Korrelation von Zieldeskriptoren mit Referenzdeskriptoren einer Bildoktavgruppe eine Korrelation von Zieldeskriptoren mit Referenzdeskriptoren einer niedrigeren Bildoktavgruppe erfolgt. Hierzu gibt es mehrere Möglichkeiten. Es kann eine Korrelation von Zieldeskriptoren zunächst mit Referenzdeskriptoren einer Gruppe von Bildoktaven erfolgen, anhand derer bereits das Zielobjekt als erkannt klassifiziert wurde. Zweckmäßigerweise wird nachfolgend mit Referenzdeskriptoren einer niedrigeren Gruppe von Bildoktaven korreliert. Oder es erfolgt unmittelbar nach einer erfolgreichen Korrelation von Zieldeskriptoren mit Referenzdeskriptoren einer Gruppe von Bildoktaven eine Korrelation von Zieldeskriptoren mit Referenzdeskriptoren einer niedrigeren Gruppe von Bildoktaven, also mit dem nächstfolgenden zu korrelierenden Zielbild.

Liegen beispielsweise insgesamt fünf Bildoktaven von Referenzdeskriptoren vor und wurde eine erfolgreiche Korrelation mit Referenzdeskriptoren aus den Bildoktaven fünf, vier und drei erzielt, so wird mit einem später aufgenommenen Zielbild, insbesondere mit dem nächsten zu korrelierenden Zielbild, eine Korrelation beispielsweise mit den Referenzdeskriptoren der Bildoktaven vier, drei und zwei durchgeführt. Ist dieser Vergleich nicht erfolgreich, so kann die nächsthöhere, in diesem Beispiel die fünfte Bildoktave, hinzugenommen werden. Der Vergleich sollte nunmehr erfolgreich sein. In einer späteren Korrelation kann nun erneut mit der Gruppe vier, drei und zwei korreliert werden, die eine niedrigere Gruppe als die Gruppe fünf, vier, drei und zwei ist.

Weiter ist es vorteilhaft, wenn der Flugkörper diejenige Bildoktave des Referenzbilds, in der das beste Korrelationsergebnis erzielt wurde, als Korrelationsoktave ermittelt. Eine erfolgreiche Korrelation wird üblicherweise mit Referenzdeskriptoren mehrerer Bildoktaven erfolgen. Wurde beispielsweise eine erfolgreiche Korrelation mit Referenzdeskriptoren der Oktaven fünf, vier und drei erzielt und lagen hierbei die meisten Referenzdeskriptoren bzw. Korrelationspunkte in der vierten Bildoktave, so ist die vierte Bildoktave die Korrelationsoktave.

Es ist nun vorteilhaft, dass der Flugkörper in Abhängigkeit von der Korrelationsoktave eine Gruppe von Bildoktaven des Referenzbilds bestimmt, die bei einer Korrelation eines nachfolgenden Zielbilds mit dem Referenzbild zunächst ausschließlich verwendet wird. Diese Gruppe kann eine solche sein, in der die Korrelationsoktave in der Mitte liegt und die beiden benachbarten Bildoktaven verwendet werden. Bei dem oben genannten Beispiel würden also in der nachfolgenden Korrelation ebenfalls die Bildoktaven fünf, vier und drei verwendet werden. Ist hingegen bei der Gruppe fünf, vier, drei die dritte Bildoktave die Korrelationsoktave, so würde beim Vergleich des nächsten Zielbilds die Gruppe der Bildoktaven vier, drei und zwei verwendet werden. Das beste Korrelationsergebnis kann hierbei die höchste Anzahl von erfolgreich korrelierten Referenzdeskriptoren pro Bildoktave und/oder das beste beispielsweise gemittelte Korrelationsergebnis der einzelnen Referenzdeskriptoren pro Oktave sein. Im Verlauf des Anflugs des Flugkörpers auf das Ziel wird die Auflösung des Zielobjekts im Zielbild immer besser werden und schließlich die Auflösung des Zielbilds im Referenzbild übertreffen. Nun sollte eine Korrelation mit höheren Bildoktaven des Zielbilds erfolgen. Da die Verwendung von höheren Bildoktaven des Zielbilds bei einem noch großen Abstand des Flugkörpers vom Zielobjekt nicht immer sinnvoll ist, so ist ein geeigneter Zeitpunkt herauszufinden, ab dem die Verwendung höherer Zielbildoktaven die Korrelation und damit die Zielerkennung verbessert. Hierbei ist es vorteilhaft, wenn der Flugkörper in Abhängigkeit von der Korrelationsoktave Zieldeskriptoren in mehreren Bildoktaven des Zielbilds ermittelt. Ist die Korrelationsoktave des Referenzbilds beispielsweise die erste oder zweite Bildoktave, so kann daraus geschlossen werden, dass die Auflösung des Zielobjekts im Zielbild bereits die Auflösung des Zielobjekts im Referenzbild erreicht oder annähernd erreicht. Nun können höhere Zielbildoktaven verwendet werden, um das Korrelationsergebnis bei folgenden Korrelationen zu verbessern.

Insofern ist es vorteilhaft, wenn das Zielbild im Laufe des Anflugs auf das Zielobjekt erneuert wird und eine höhere Auflösung als das Referenzbild aufweist und die Zieldeskriptoren in mehreren Bildoktaven des Zielbilds ermittelt und mit den Referenzdeskriptoren verglichen werden.

Ebenfalls möglich und vorteilhaft ist es, wenn die Bildoktaven des Zielbilds in Abhängigkeit eines nachlassenden besten Korrelationsergebnisses erstellt werden. Bei einem nachlassenden Korrelationsergebnis im Laufe des Anflugs kann geschlossen werden, dass die Auflösung des Zielobjekts im Zielbild deutlich höher ist als im Referenzbild und somit die harten Strukturen aus dem Zielbild nicht mehr mit dem Referenzbild korreliert werden können. Um die Erkennung des Zielobjekts zuverlässig zu halten, ist es nun vorteilhaft, auch höhere Bildoktaven des Zielbilds zu verwenden.

Zweckmäßigerweise wird das Zielbild im sichtbaren Spektralbereich und/oder im infraroten Spektralbereich aufgenommen. Entsprechend ist es vorteilhaft, wenn die Referenzdeskriptoren aus einem im sichtbaren Spektralbereich und/oder einem in infraroten Spektralbereich aufgenommenen Referenzbild ermittelt wurden. Auf diese Weise kann eine zuverlässige Klassifizierung erreicht werden, die beispielsweise auch bei schlechter Sicht bzw. Dunkelheit möglich ist.

Eine weitere vorteilhafte Ausführungsform der Erfindung sieht vor, dass ein Zielpunkt im Bild des Zielobjekts festgelegt ist und die relative Lage des Zielpunkts zu Schlüsselpunkten ermittelt wird. Der Zielpunkt kann beispielsweise durch einen Bediener, wie einen Piloten, oder automatisiert festgelegt werden. Die Schlüsselpunkte sind zweckmäßigerweise Schlüsselpunkte des Referenzbilds. Diese können als Zielpunktschlüsselpunkte gekennzeichnet werden. Erfolgt nun eine erfolgreiche Korrelation mit einer ausreichenden Anzahl von Zielpunktschlüsselpunkten, so kann die Lage des Zielpunkts auch im Zielbild festgestellt werden. Der Flugkörper kann nun punktgenau auf den Zielpunkt zusteuern, sodass beispielsweise eine vorteilhafte Wirkung des Flugkörpers am Zielobjekt erreicht wird. Die Lage des Zielpunkts kann als Koordinaten des Punkts, eine örtliche Lage im aufgenommenen Zielbild und/oder eine Richtung des Punkts absolut oder relativ beispielsweise zu einer Ausrichtung einer beobachtenden bzw. aufnehmenden Optik sein.

Weiter ist es vorteilhaft, wenn ein Zielfeld im Referenzbild markiert wird, in dem das Zielobjekt zumindest teilweise abgebildet ist und die Schlüsselpunkte zweckmäßigerweise ausschließlich aus dem Zielfeld ermittelt werden. Die Markierungen kann beispielsweise ein Markierer in Form einer Person vornehmen, beispielsweise ein Besatzungsmitglied der bildgebenden Plattform. Je nach Möglichkeiten der bildgebenden Plattform kann eine automatische Einheit der bildgebenden Plattform auch das Zielobjekt als solches erkennen und das Zielfeld automatisch um das Zielobjekt legen. Durch diese Maßnahme der Markierung des Zielfelds wird die Zahl der nicht relevanten charakteristischen Bildmerkmale im Referenzbild reduziert und eine Korrelationsrechenzeit wird verringert.

Weiter wird vorgeschlagen, dass zusätzlich zu den charakteristischen Bildmerkmalen auch ein Anflugkorridor an den Flugkörper übergeben wird. Hierdurch kann ein Deskriptorenvergleich erfolgreich gehalten werden, und es kann vermieden werden, dass eine zu große Winkelabweichung zwischen den Aufnahmen des Referenzbilds und des Zielbilds zu Störungen der Korrelation führen. Außerdem können durch den Anflugkorridor Kollateralschäden vermieden werden. Der Anflugkorridor kann in Form von Koordinaten, z.B. eines Zwischenpunkts in der Flugbahn, und/oder einer Anflugrichtung übergeben werden, beispielsweise einer geografisch absoluten Anflugrichtung. Der Anflugkorridor kann auch durch die Lage von Schlüsselpunkten zueinander bestimmt sein. Je nach Anflugrichtung auf das Zielobjekt liegen die Schlüsselpunkte in einer mehr oder weniger unterschiedlichen relativen Lage zueinander. Es können nun Anflugschlüsselpunkte definiert werden, die in einem vorgegebenen Lagebereich zueinander angeordnet sein müssen. Aus der Lage der Anflugschlüsselpunkte im Zielbild kann nun errechnet werden, wie der Flugkörper fliegen muss, um im Anflugkorridor zu bleiben bzw. diesen erst zu erreichen.

Die Erfindung ist außerdem gerichtet auf einen Flugkörper mit einem Steuerleitwerk, einer optischen Zielerfassung und einer Steuereinheit, die dazu vorbereitet ist, aus einem von der Zielerfassung erstellten Zielbild charakteristische Bildmerkmale zu ermitteln und anhand der charakteristischen Bildmerkmale auf das Zielobjekt zuzufliegen.

Es wird vorgeschlagen, dass die Steuereinheit erfindungsgemäß dazu vorbereitet ist, als charakteristische Bildmerkmale Schlüsselpunkte im Zielbild zu ermitteln und insbesondere zu jedem Schlüsselpunkt zumindest einen mehrdimensionalen Zieldeskriptor. Die Steuereinheit ist zweckmäßigerweise dazu vorbereitet, Zieldeskriptoren mit Referenzdeskriptoren aus einem Referenzbild zu vergleichen und das Zielobjekt bei einem Vergleichsergebnis oberhalb eines Grenzwerts als erkannt zu klassifizieren - und unter Verwendung der Richtung des erkannten Zielobjekts - eine Ansteuerung auf das Zielobjekt zu steuern.

Die bisher gegebene Beschreibung vorteilhafter Ausgestaltungen der Erfindung enthält zahlreiche Merkmale, die in einigen abhängigen Ansprüchen zu mehreren zusammengefasst wiedergegeben sind. Diese Merkmale können jedoch zweckmäßigerweise auch einzeln betrachtet und zu sinnvollen weiteren Kombinationen zusammengefasst werden, insbesondere bei Rückbezügen von Ansprüchen, so dass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: eine Landschaft, durch die ein Flugkörper durch eine Wolkendecke auf ein Zielobjekt zu gelenkt wird,
- FIG 2: eine schematische Darstellung des Flugkörpers,
- FIG 3: das Zielobjekt in der Landschaft aus der Perspektive des anfliegenden Flugkörpers und
- FIG 4: eine schematische Darstellung von mehreren Bildoktaven eines Referenzbilds und eines Zielbilds vom Zielobjekt.

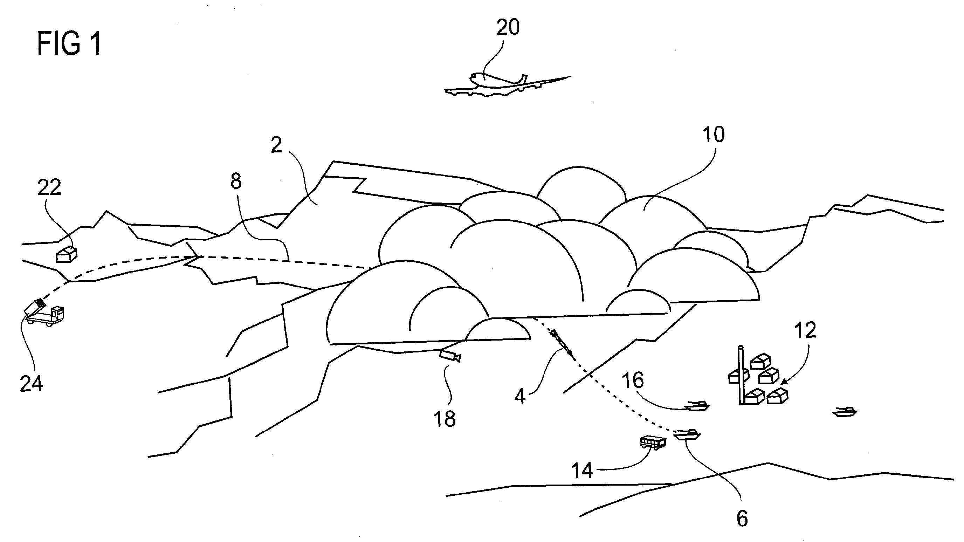

FIG 1 zeigt eine schematische Darstellung einer Landschaft 2, in der ein Flugkörper 4 auf ein Zielobjekt 6 zufliegt, wie durch eine gestrichelte Flugbahn 8 angedeutet ist. Die Flugbahn 8 führt durch eine geschlossene Wolkendecke 10, sodass dem Flugkörper 4 in einer ersten Flugphase, die in FIG 1 durch eine weit gestrichelte Flugbahn 8 angedeutet ist, die Sicht auf das Zielobjekt 6 versperrt ist. Erst in einer nachfolgenden Flugphase, die in FIG 1 durch eine eng gestrichelte Linie angedeutet ist, hat der Flugkörper 4 Sicht auf das Zielobjekt 6.

Neben dem Zielobjekt 6 befinden sich Gebäude 12 mit einer teilweise sehr starken Infrarotsignatur, die durch einen Schornstein angedeutet ist. In unmittelbarer Nachbarschaft zum Zielobjekt 6 befindet sich ein ziviles Fahrzeug 14 und ein militärisches Fahrzeug 16, die beide eine ähnliche thermische Signatur aufweisen wie das Zielobjekt 6 selbst. Der Flugkörper 4 soll nun ohne Sicht auf das Zielobjekt 6 präzise in das Zielobjekt 6 hinein gesteuert werden, ohne Kollateralschäden am Fahrzeug 14 oder dem Gebäude 12 zu verursachen oder durch das Fahrzeug 16 abgelenkt zu werden.

Der Flugkörper 4 kann ein angetriebener Flugkörper mit beispielsweise einem Raketentriebwerk sein. Der Flugkörper 4 kann von einer bildgebenden Plattform, wie dem Luftfahrzeug 20 oder einem Hubschrauber, oder von einer Startplattform 24 aus abgeschossen werden, wie es in FIG 1 dargestellt ist. Hier ist die Startplattform ein Fahrzeug mit einem Raketenkanister. Möglich ist auch, dass der Flugkörper 4 ein nicht angetriebener Flugkörper ist, beispielsweise lenkbare Artilleriemunition oder ein vom Luftfahrzeug 20 abgeworfener Effektor.

Zum Steuern des Flugkörpers 4 auf das Zielobjekt 6 wird ein Referenzbild des Zielobjekts 6 von einer bildgebenden Plattform 18 aufgenommen. In FIG 1 ist diese bildgebende Plattform 18 schematisch als eine Kamera dargestellt, die beispielsweise durch einen Bediener tragbar ist und mit der das Referenzbild von einer dem Zielobjekt 6 relativ nahen Position aus gemacht wird. Es ist jedoch auch möglich, dass die bildgebende Plattform eine Luftfahrzeug 20 ist, beispielsweise ein Aufklärungsflugzeug, das zuvor das Referenzbild vom Zielobjekt 6 aufgenommen hat. Anstelle des in FIG 1 dargestellten Flugzeugs kann das Luftfahrzeug 20 auch ein Hubschrauber sein, der kurz über die in FIG 1 angedeutete Bergkette geflogen ist, ein Referenzbild vom Zielobjekt 6 erstellt hat und sich sofort wieder hinter die Bergkette zurückgezogen hat.

Aus dem Referenzbild des Zielobjekts 6 werden nun charakteristische Bilddaten in Form von Schlüsselpunkten und zu diesen jeweils einem Referenzdeskriptor gebildet. Die Schlüsselpunkte können als Koordinaten bereits in ihrem jeweiligen Referenzdeskriptor enthalten sein, sodass die Schlüsselpunkte nicht ohne die Referenzdeskriptoren vorliegen. Die Referenzdeskriptoren werden durch einen SIFT-oder SURF-Merkmalsdetektor gewonnen. Zumindest die Referenzdeskriptoren werden dem Flugkörper 4 als charakteristische Bilddaten übergeben, um ein Lenken auf das Zielobjekt 6 zu ermöglichen.

Die Bestimmung der Referenzdeskriptoren kann in der Plattform 18 selbst erfolgen, insbesondere wenn diese in Form eines Fahrzeugs, z.B. eines Luftfahrzeugs ausgeführt ist. Möglich ist auch, dass die Referenzdeskriptoren in einer stationären Einheit 22, wie einem Gebäude, insbesondere eine Feuerleitstelle, ermittelt werden. Die charakteristischen Bilddaten werden dem Flugkörper 4 beispielsweise drahtgebunden vor einem Start, beispielsweise vom Raketenkanister oder einem Launcher eines Luftfahrzeugs, vor dem Start oder drahtlos vor oder nach dem Start übermittelt.

Für den ersten Anflug in Richtung auf das Zielobjekt 6 erhält der Flugkörper 4 außerdem Einweisungsdaten, um in der ersten Flugphase ohne Sicht auf das Zielobjekt 6 den richtigen Weg zu steuern. Dies sind beispielsweise Koordinaten, bei denen sich das Zielobjekt 6 in etwa aufhält, die der Flugkörper 4 beispielsweise GPSgesteuert anfliegt. Nach Durchbruch durch die Wolkendecke 10 erhält der Flugkörper 4 Sicht auf das Zielobjekt 6 und erkennt dieses als solches und fliegt es direkt an.

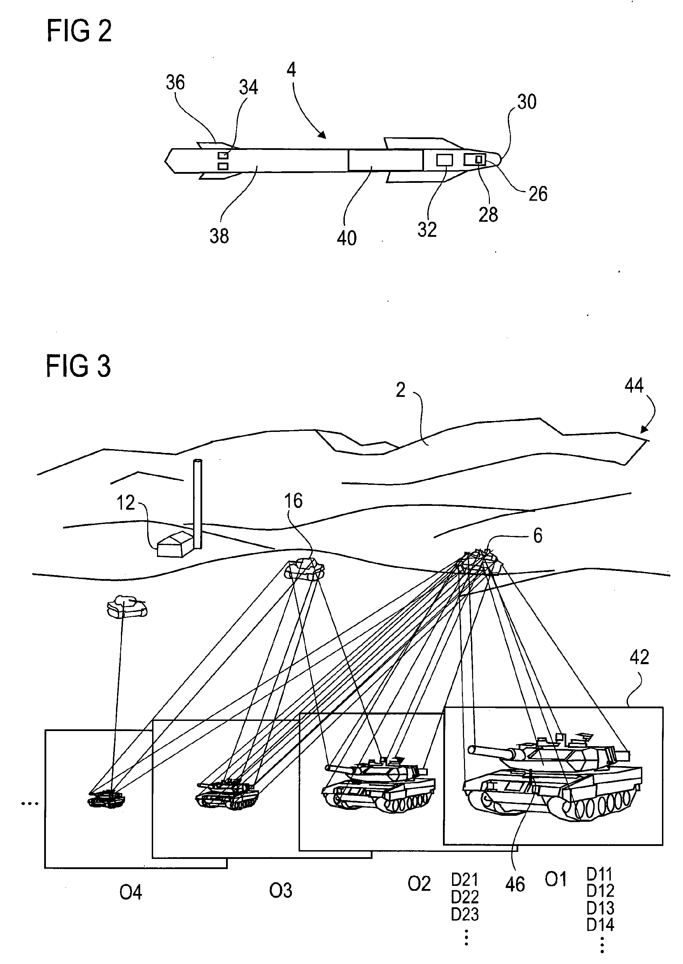

FIG 2 zeigt den Flugkörper 4 in einer schematischen Darstellung von der Seite. Der Flugkörper 4 enthält einen Suchkopf 26 mit einer Optik 28, die durch einen transparenten Dom 30 Sicht nach vorne hat. Eine Steuereinheit 32 mit einem Datenspeicher enthält die charakteristischen Referenzbildmerkmale und ist außerdem dazu vorbereitet, aus den Daten des Suchkopfs 26 und den charakteristischen Referenzbildmerkmalen das Zielobjekt 6 als solches zu erkennen. Weiter ist die Steuereinheit 32 dazu vorbereitet, mithilfe von Antrieben 34 ein Leitwerk 36 so anzusteuern, dass der Flugkörper 4 in Richtung auf das Zielobjekt 6 gesteuert wird. Weiter enthält der Flugkörper 4 ein Raketentriebwerk 38 und einen Wirkteil 40 in Form einer Sprengladung.

Während des Flugs des Flugkörpers 4 nimmt der Suchkopf 26 fortwährend Zielbilder der Umgebung auf. Aus diesen Zielbildern oder ausgewählten Zielbildern werden charakteristische Bildmerkmale in Form von zumindest Zieldeskriptoren und/oder Schlüsselpunkten ermittelt. Die Zieldeskriptoren werden mit den Referenzdeskriptoren verglichen, und das Zielobjekt 6 wird bei einem erfolgreichen Vergleich als erkannt klassifiziert. Anhand der Darstellung aus FIG 3 wird das Erkennungsverfahren im Folgenden näher erläutert.

FIG 3 zeigt das Zielobjekt 6 in der Landschaft 2 aus Sicht des anfliegenden Flugkörpers 4. Zu sehen sind ein Teil der Gebäude 12 mit dem Schornstein und das dem Zielobjekt 6 nahe Fahrzeug 16. Weiter zeigt FIG 3 das Referenzbild 42, das zuvor von der Plattform 18 aufgenommen wurde. Sowohl das Zielbild 44 als auch das Referenzbild 42 sind im Infrarotspektrum aufgenommen. Zweckmäßigerweise wird ein Zielfeld im Referenzbild 42 markiert, z.B. von einem Bediener, in dem das Zielobjekt 6 zumindest teilweise abgebildet ist. Die Schlüsselpunkte werden ausschließlich aus dem Zielfeld ermittelt. Dieses Zielfeld ist in FIG 3 durch den Rahmen des Referenzbilds 42 dargestellt, das als solches gegebenenfalls über den gezeigten Rahmen hinausgeht, was in FIG 3 der Übersichtlichkeit halber nicht dargestellt ist.

Aus dem Referenzbild 42, das eine 15-fach höhere Auflösung des Zielobjekts 6 als das Zielbild aufweist, wurden Referenzdeskriptoren. Dii ermittelt und dem Flugkörper 4 übergeben. Das Referenzbild 42 bildet hierbei die erste Bildoktave 01, aus dem die Referenzdeskriptoren D1i ermittelt wurden. Wie oben beschrieben, wurden aus der ersten Bildoktave 01 höhere Bildoktaven 02, 03, 04, ... gewonnen, beispielsweise durch das Zusammenlegen von 2 x 2 Pixeln zu einem Pixel, beispielsweise durch Mittelung. Die höheren Oktaven sind insofern Bilder vom Zielobjekt 6 mit einer immer weiter verringerten Bildauflösung. Diese sind in FIG 3 durch die immer kleiner werdenden Darstellungen des Bilds des Zielobjekts 6 angedeutet.

Aus der zweiten Bildoktave 02 wurden die Referenzdeskriptoren D2i extrahiert, aus der dritten Bildoktave 03 die Referenzdeskriptoren D3i, und so weiter.

Zu einem Zeitpunkt t während des Flugs des Flugkörpers 4 mit Sicht auf das Zielobjekt 6 liegt das aktuellste Zielbild 44 vor, beispielsweise wie in FIG 3 durch die Landschaft 2 und die darin enthaltenen Objekte 6, 12, 16 angedeutet ist. Aus dem Zielbild 44 errechnet die Steuereinheit 32 Zieldeskriptoren, die es mit den Referenzdeskriptoren Dii vergleicht. Hierbei besteht die Möglichkeit, dass auch aus dem Zielbild 44 mehrere Oktaven und daraus die entsprechenden Zieldeskriptoren ermittelt werden. Es ist jedoch auch möglich, dass nur das Zielbild 44 als solches zur Extraktion der Zieldeskriptoren verwendet wird und auf höhere Oktaven des Zielbilds 44 zunächst verzichtet wird.

Durch die Korrelation ergeben sich erfolgreiche Zuordnungen von Schlüsselpunkten im Referenzbild 42 beziehungsweise dessen höheren Oktaven Oi mit Schlüsselpunkten im Zielbild 44. Die Schlüsselpunkte sind in FIG 3 zu Zwecken der Darstellung mit geraden Linien miteinander verbunden. Es ist zu sehen, dass Schlüsselpunkte aus dem Referenzbild 42 inklusive den ihm innewohnenden höheren Oktaven 02, 03, ... mit vielen Schlüsselpunkten im Zielbild 44 korrelieren, auch in nicht zutreffender Weise. Allerdings ist auch sichtbar, dass mit Abstand die meisten Korrelationspunkte des Referenzbilds 42 mit Schlüsselpunkten direkt im Bild des Zielobjekts 6 in Zielbild 44 korrelieren und somit diesem zugeordnet sind. Um die Darstellung aus FIG 3 übersichtlich zu halten, ist nur eine Auswahl von Korrelationspunkten dargestellt.

Bei dem in FIG 3 dargestellten Beispielzeitpunkt ist die Anzahl der Korrelationspunkte aus der dritten Bildoktave 03 des Referenzbilds 42 ausreichend groß, sodass das Zielobjekt 6 von der Steuereinheit 32 als erkannt klassifiziert wird. Die Korrelationen mit den anderen Fahrzeugen aus FIG 3 ist nicht groß genug, um eine Erkennung als erfolgreich zu klassifizieren.

Bei dem in FIG 3 dargestellten Ausführungsbeispiel erfolgte die Korrelation mit allen Bildoktaven Oi des Referenzbilds 42, also mit allen aus den Bildoktaven Oi ermittelten Referenzdeskriptoren Dii. Da eine Vielzahl von Zielbildern 44 während des Anflugs schnell hintereinander aufgenommen werden, liegt in kurzen Zeitanständen immer wieder ein neues Zielbild 44 vor, das es mit dem Referenzbild 42 zu korrelieren gilt. Für die einzelne Korrelation eines Zielbilds 44 mit dem Referenzbild 42 steht daher nur ein sehr kleines Zeitfenster zur Verfügung.

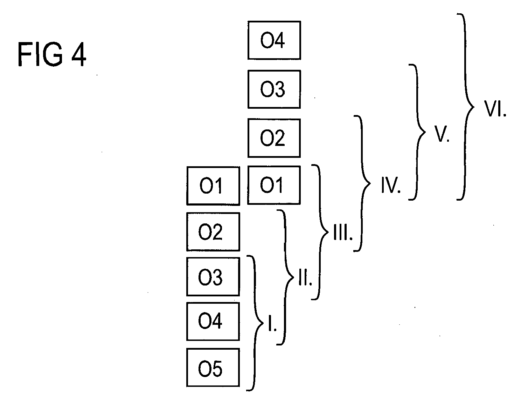

Die Rechenzeit für die Korrelation kann verkürzt werden, wenn die Zieldeskriptoren nicht mit allen Referenzdeskriptoren Dii verglichen werden. Je nachdem, wie weit die maximale Sicht des Flugkörpers 4 auf das Zielobjekt 6 ist, so wird das erste Zielbild 44 des Zielobjekts 6 dieses nur sehr aus der Ferne und damit mit einer geringen Auflösung zeigen. Eine Korrelation mit den harten Strukturen des Referenzbilds 42 aus den niederen Oktaven Oi ist daher unwahrscheinlich. Viel wahrscheinlicher ist ein hoher Korrelationserfolg zunächst mit den oberen Oktaven Oi. Es wird daher im vorliegenden Ausführungsbeispiel zunächst ausschließlich mit Referenzdeskriptoren Dii einer Gruppe von Bildoktaven Oi korreliert werden, die die höchste Bildoktave, im vorliegenden Ausführungsbeispiel zum Beispiel die Oktave 05, beinhaltet. Dies ist schematisch in FIG 4 dargestellt.

FIG 4 zeigt beispielhaft fünf Bildoktaven O1 bis 05 des Referenzbilds 42 und vier Bildoktaven 01 bis 04 des Zielbilds 44. In einer ersten Korrelationsphase I wird ausschließlich mit den Referenzdeskriptoren Dii aus den drei höchsten Oktaven 03 bis 05 korreliert. Nach einer erfolgreichen Korrelation, bei der also das Zielobjekt 6 als solches erkannt wurde, kann, insbesondere unmittelbar danach, also mit dem als nächstes zu korrelierenden Zielbild 44, mit einer niedrigeren Gruppe von Bildoktaven Oi korreliert werden. Diese sind FIG 4 beispielhaft in der Korrelationsphase II dargestellt. Es wird insofern in diesem Ausführungsbeispiel mit der Gruppe 02 bis 04 korreliert. Sollte dies nicht erfolgreich sein, so kann die nächst höhere Bildoktave, in diesem Beispiel 05, in die Korrelationsgruppe mit aufgenommen werden.

Bei dem in FIG 3 dargestellten Zeitpunkt liegen die meisten Referenzdeskriptoren Dii, die zu Korrelationspunkten geführt haben, aus der dritten Oktave 03 vor. Diese Oktave 03 wird nun als Korrelationsoktave von der Steuereinheit 32 bestimmt. In Abhängigkeit von der Korrelationsoktave wird nun die bei der nächsten Korrelation zu verwendende Korrelationsgruppe bestimmt. Beispielweise werden die Korrelationsoktave 03 und die beiden nächst niedrigeren Oktaven 02, 01 als nächstfolgende Korrelationsgruppe für die dritte Korrelationsphase III gewählt. Ist die Korrelation erfolgreich, die Korrelationsoktave ist jedoch die höchste Oktave der Korrelationsgruppe, so kann die Korrelationsgruppe für einen nächstfolgenden Vergleich beibehalten werden.

Verändert sich jedoch die Korrelationsoktave zu einer niedrigeren Oktave, beispielsweise von der dritten Oktave 03 in die zweite Oktave 02, so kann auch eine andere Korrelationsgruppe, zweckmäßigerweise eine niedrigere Korrelationsgruppe gewählt werden. Für eine solche Gruppe stünden im gezeigten Ausführungsbeispiel nur noch die beiden niedrigsten Oktaven 02, O1 zur Verfügung. Allerdings ist aus der niedrigen Korrelationsoktave erkennbar, dass das Zielbild 44 das Zielobjekts 6 bereits recht detailliert darstellt, da harte, also kleinteilige Strukturen sichtbar sind. Es ist insofern vorteilhaft, in Anhängigkeit von der Korrelationsoktave Zieldeskriptoren einer höheren Oktave des Zielbilds 44 als die Grundoktave O1 des Zielbilds 44 mit für die Korrelation zu verwenden. Dies ist in FIG 4 beispielhaft anhand der vierten Korrelationsphase IV dargestellt, in der die nächst höhere Oktave 02 aus dem Zielbild 44 zur Korrelation mitverwendet wird, beziehungsweise die aus dieser Oktave 02 ermittelten Zieldeskriptoren. Insofern können die nächsthöheren Bildoktaven des Zielbilds 44 als nächstniedrigere Bildoktaven des Referenzbilds 42 in Bezug auf eine Korrelationsoktavgruppe aufgefasst werden.

Im weiteren Verlauf wandert die Korrelationsoktave in den Referenzbildoktaven nach unten und gegebenenfalls in den Zielbildoktaven nach oben. In Abhängigkeit hiervon werden neue Oktavgruppen ausgewählt, wie in den Korrelationsphasen V und VI aus FIG 4 angedeutet ist.

Durch die Erkennung des Zielobjekts 6 als solches ist der Flugkörper 4 beziehungsweise die Steuereinheit 32 befähigt, auf das Zielobjekt 6 zuzufliegen beziehungsweise den Flugkörper 4 in das Zielobjekt 6 hineinzusteuern. Hierbei kann es von Bedeutung sein, wo der Flugkörper 4 auf das Zielobjekt 6 auftrifft. Ein solcher geeignete Zielpunkt 46, wie im Zielbild 42 in FIG 3 beispielhaft angegeben ist, ist eventuell nicht durch charakteristische Bildstrukturen im Referenzbild 42 gekennzeichnet, sodass ein solcher Zielpunkt 46 nicht von sich aus erkannt und angesteuert werden kann. Der Zielpunkt 46 kann durch einen Markierer, beispielsweise einen Piloten der Plattform 18, festgelegt werden.

Um eine präzise Ansteuerung in den Zielpunkt 46 hinein zu ermöglichen, wird der Zielpunkt 46 in einen geometrischen Bezug zu einigen oder allen Schlüsselpunkten im Referenzbild 42 gesetzt. Diese zur Lagebestimmung des Zielpunkts 46 verwendeten Schlüsselpunkte können als Zielpunktschlüsselpunkte bezeichnet werden und werden zweckmäßigerweise in ihrem Referenzdeskriptor als solche gekennzeichnet. Bei einer erfolgreichen Korrelation werden einige Zielpunktschlüsselpunkte zu Korrelationspunkten in Zielbild 44. Aus der Lage dieser Korrelationspunkte im Zielbild 44 kann die Lage des Zielpunkts 46 auch in Zielbild 44 rekonstruiert werden. Die Lage des Zielpunkts 46 relativ zu den Zielpunktschlüsselpunkten kann ein Bestandteil, beispielsweise eine Dimension der Referenzdeskriptoren sein, die den Zielpunktschlüsselpunkten zugeordnet sind. Wird ein solcher Referenzdeskriptor Korrelationsdeskriptor, so kann die Steuereinheit 32 erkennen, dass aus ihm die Lage eines Zielpunkts 46 ableitbar ist. Aus der Lage von drei solchen Zielpunktschlüsselpunkten bzw. Korrelationspunkten kann von der Steuereinheit 32 somit die Lage des Zielpunkts 46 in Zielobjekt 6 bestimmt werden, und der Flugkörper 6 kann präzise in den Zielpunkt gesteuert werden.

Um Kollateralschäden zu vermeiden und/oder um eine erfolgreiche Korrelation zu erhalten, kann es vorteilhaft sein, wenn der Flugkörper 4 in einem bestimmten Anflugkorridor auf das Zielobjekt 6 zufliegt. Im vorliegenden Ausführungsbeispiel wird der Anflugkorridor durch die Lage von Schlüsselpunkten im Referenzbild 42 bestimmt. Solche Schlüsselpunkte können in ihren Referenzdeskriptoren als Korridorschlüsselpunkte gekennzeichnet werden, sodass die Steuereinheit 32 aus ihnen einen Anflugkorridor ableitet. Die Lage von Korridorschlüsselpunkten zueinander bestimmt die Perspektive des Anflugs und damit eine Anflugrichtung. Diese Perspektive kann im Anflug hergestellt werden, und hiermit wird der Anflugkorridor durchflogen.

Die Verwendung von Korridorschlüsselpunkten zur Festlegung eines Anflugkorridors führt dazu, dass sich bei einer Drehung des Zielobjekts 6 auch der Anflugkorridor auf das Zielobjekt 6 ändern kann. Liegen die Korridorschlüsselpunkte beispielsweise direkt auf der Darstellung des Zielobjekts 6 im Referenzbild 42, so führt eine Verdrehung des Zielobjekts 6 zur Landschaft 2 zu einer Änderung der Anflugrichtung beziehungsweise des Anflugkorridors. Dies kann für eine zuverlässige Korrelation sinnvoll sein.

Ist jedoch gewünscht, dass der Anflugkorridor relativ zur Landschaft 2 festgelegt ist, so können Schlüsselpunkte in der Landschaft in der Umgebung des Zielobjekts 6 als Korridorschlüsselpunkte ausgewählt werden. Dies können markante Gebäude, Bäume oder dergleichen sein. Der Flugkörper 4 erkennt die Korridorschlüsselpunkte und richtet seinem Flug beziehungsweise seine Flugrichtung so aus, dass die Perspektive der Korridorschlüsselpunkte zueinander in einer vorgegebenen Anordnung liegt. Ein verdrehendes Zielobjekt 6 führt somit nicht mehr zu einer Änderung des Anflugkorridors. Es ist auch möglich, mehrere Anflugkorridore hintereinander zu legen, beispielsweise zunächst einen landschaftsbestimmten Anflugkorridor, der durch Schlüsselpunkte in der Landschaft bestimmt ist, und dann einen Zielobjekt bestimmten Anflugkorridor, der durch Schlüsselpunkte im Bild des Zielobjekts 6 im Referenzbild 42 festgelegt ist.

### Bezugszeichenliste

- 2: Landschaft
- 4: Flugkörper
- 6: Zielobjekt
- 8: Flugbahn
- 10: Wolkendecke
- 12: Gebäude
- 14: Fahrzeug
- 16: Fahrzeug
- 18: Plattform
- 20: Luftfahrzeug
- 22: Einheit
- 24: Startplattform
- 26: Suchkopf
- 28: Optik
- 30: Dom
- 32: Steuereinheit
- 34: Antrieb
- 36: Leitwerk
- 38: Raketentriebwerk
- 40: Wirkteil
- 42: Referenzbild
- 44: Zielbild
- 46: Zielpunkt
- D: Referenzdeskriptor
- I: Korrelationsphase
- O: Bildoktave

## Patentansprüche

1. Verfahren zum Lenken eines Flugkörpers (4) auf ein Zielobjekt (6), bei dem eine bildgebende Plattform (18) ein Referenzbild (42) des Zielobjekts (6) erstellt, charakteristische Bildmerkmale aus dem Referenzbild (42) ermittelt werden, diese dem Flugkörper (4) übergeben werden, der Flugkörper (4) ein Zielbild (44) des Zielobjekts (6) erstellt und unter Verwendung der charakteristischen Bildmerkmale das Zielobjekt (6) ansteuert,
**dadurch gekennzeichnet,**
**dass** als charakteristische Bildmerkmale Schlüsselpunkte im Referenzbild (42) ermittelt werden und zu jedem Schlüsselpunkt zumindest ein mehrdimensionaler Referenzdeskriptor (Dii), und der Flugkörper (4) aus dem Zielbild (44) Schlüsselpunkte und zu diesen jeweils zumindest einen Zieldeskriptor ermittelt, Zieldeskriptoren mit Referenzdeskriptoren (Dii) vergleicht und das Zielobjekt (6) bei einem Vergleichsergebnis oberhalb eines Grenzwert als erkannt klassifiziert und ansteuert.

2. Verfahren nach Anspruch 1,
**dadurch gekennzeichnet,**
**dass** der Flugkörper (4) das Zielobjekt (6) unter Verwendung vorläufiger Einweisungsdaten bereits anfliegt bevor die ersten Zieldeskriptoren ermittelt sind und er seinen Flugkurs anhand der später ermittelten Schlüsselpunkte verändert.

3. Verfahren nach Anspruch 1 oder 2,
**dadurch gekennzeichnet,**
**dass** die Referenzdeskriptoren (Dii) aus mehreren Bildoktaven (Oi) des Referenzbilds (42) ermittelt werden und das Referenzbild (42) eine zumindest 10-fach höhere Auflösung des Zielobjekts (6) aufweist, als das vom Flugkörper (4) aufgenommene Zielbild (44).

4. Verfahren nach Anspruch 3,
**dadurch gekennzeichnet,**
**dass** eine Korrelation von Zieldeskriptoren zunächst mit Referenzdeskriptoren (Dii) ausschließlich einer ersten Gruppe von Bildoktaven (Oi) und nachfolgend mit Referenzdeskriptoren (Dii) ausschließlich einer zweiten, niedrigeren Gruppe von Bildoktaven (Oi) erfolgt.

5. Verfahren nach Anspruch 3 oder 4,
**dadurch gekennzeichnet,**
**dass** nach einer erfolgreichen Korrelation von Zieldeskriptoren mit Referenzdeskriptoren (Dii) einer Gruppe von Bildoktaven (Oi) eine Korrelation von Zieldeskriptoren mit Referenzdeskriptoren (Dii) einer niedrigeren Gruppe von Bildoktaven (Oi) erfolgt.

6. Verfahren nach einem der Ansprüche 3 bis 5,
**dadurch gekennzeichnet,**
**dass** der Flugkörper (4) diejenige Bildoktave (Oi) des Referenzbilds (42), in der das beste Korrelationsergebnis erzielt wurde, als Korrelationsoktave ermittelt.

7. Verfahren nach Anspruch 6,
**dadurch gekennzeichnet,**
**dass** der Flugkörper (4) in Abhängigkeit von der Korrelationsoktave Zieldeskriptoren in mehreren Bildoktaven (Oi) des Zielbilds (44) ermittelt.

8. Verfahren nach einem der vorhergehenden Ansprüche,
**dadurch gekennzeichnet,**
**dass** das Bild des Zielobjekts (6) im sichtbaren und zusätzlich im infraroten Spektralbereich aufgenommen wird und die Referenzdeskriptoren (dii) aus beiden Spektralbereichen ermittelt werden.

9. Verfahren nach einem der vorhergehenden Ansprüche,
**dadurch gekennzeichnet,**
**dass** ein Markierer einen Zielpunkt (46) im Bild des Zielobjekts (6) festlegt und die relative Lage des Zielpunkts (46) zu Schlüsselpunkten ermittelt wird.

10. Verfahren nach Anspruch 9,
**dadurch gekennzeichnet,**
**dass** die zur Lage des Zielpunkts (46) in Beziehung gesetzten Schlüsselpunkte als Zielpunktschlüsselpunkte gekennzeichnet werden und der Flugkörper (4), nachdem das Zielobjekt (6) als solches klassifiziert wurde, den Zielpunkt (46) unter Verwendung der Lage der Zielpunktschlüsselpunkte im Zielbild (44) bestimmt und auf den so ermittelten Zielpunkt (46) zu fliegt.

11. Verfahren nach einem der vorhergehenden Ansprüche,
**dadurch gekennzeichnet,**
**dass** ein Zielfeld im Referenzbild (42) markiert wird, in dem das Zielobjekt (6) zumindest teilweise abgebildet ist, und die Schlüsselpunkte ausschließlich aus dem Zielfeld ermittelt werden.

12. Verfahren nach einem der vorhergehenden Ansprüche,
**dadurch gekennzeichnet,**
**dass** zusätzlich zu den charakteristischen Bildmerkmalen auch ein Anflugkorridor an den Flugkörper (4) übergeben wird.

13. Verfahren nach Anspruch 12,
**dadurch gekennzeichnet,**
**dass** der Anflugkorridor anhand von Schlüsselpunkten angegeben ist.

14. Verfahren nach Anspruch 12 oder 13,
**dadurch gekennzeichnet,**
**dass** der Anflugkorridor anhand der Lage von Schlüsselpunkten zueinander angegeben ist.

15. Flugkörper (4) mit einem Steuerleitwerk (36), einem optischen Suchkopf (26) und einer Steuereinheit (32), die dazu vorbereitet ist, aus einem von dem Suchkopf (26) erstellten Zielbild (44) eines Zielobjekts (6) charakteristische Bildmerkmale zu ermitteln und anhand der charakteristischen Bildmerkmale auf das Zielobjekt (6) zuzufliegen,
**dadurch gekennzeichnet,**
**dass** die Steuereinheit (32) dazu vorbereitet ist, als charakteristische Bildmerkmale Schlüsselpunkte im Zielbild (44) zu ermitteln und zu jedem Schlüsselpunkt zumindest einen mehrdimensionalen Zieldeskriptor.
